# EUROPEAN PATENT SPECIFICATION

(11) **EP 1 443 844 B1**
(45) Date of publication and mention of the grant of the patent: **28.04.2010**
(21) Application number: 02783967.9
(22) Date of filing: 11.10.2002
(51) Int. Cl.: A47L 9/16

(54) **A CYCLONE SEPARATOR FOR A SUCTION CLEANER**
EIN ZYKLONABSCHEIDER FÜR EINEN STAUBSAUGER
SEPARATEUR CYCLONE POUR UN ASPIRATEUR

(30) Priority: 12.10.2001 TR 200102961
(43) Date of publication of application: 11.08.2004
(73) Proprietor: Arçelik A.S., 34950 Istanbul (TR)
(72) Inventor: DURST, Franz, LSTM Friedrich-Alexander Universität, Erlangen, 91058 Nürnberg (DE); SEKER, Deniz, Arçelik Anonim Sirketi, Tuzla, 34950 Istanbul (TR); ERTUNC, Ozgür, 91054 Erlangen (DE)
(86) International application number: PCT/TR2002/000065
(87) International publication number: WO 2003/030703

(56) References cited:
- EP-A- 0 344 748
- WO-A-00/21428
- DE-A- 3 905 894
- US-A- 2 377 721
- US-A- 4 569 687

## Description

The present invention relates to cyclone dust separating device, placed on the suction path of a vacuum cleaner, which increases the service life of the dust-collecting bag and filter used in said vacuum cleaner.

The cyclone separators are the most commonly used devices in industrial separation processes, such as for petroleum and cool particle separation, etc., due to their low cost and easy maintenance aspects. The general operational principle of said separators is based on the separation of materials with different properties from each other, by using centrifugal force. They are used in the separation processes of, liquid-liquid, gas-liquid, gas-solid and solid-solid phases.

The cyclone separating devices are used as an independent unit that is placed on the suction path in the vacuum cleaners. In this manner, a fraction of the dust suctioned during the cleaning process of the vacuum cleaner, is separated before the dirt enters the dust-bag or filter and is collected in a dust collecting chamber. Remaining particles are received in the dust-bag and filters. The cyclone separator may be so designed that small or large particles could be separated, depending on the intended use. In cases when small dust particles are separated, the blocking of the dust-bag in a short time, is avoided.

In the UK Patent No. GB2344278, a cyclone dust collecting device placed in a different axis with respect to the extension pipe of the cleaner, is disclosed. This positioning of the cyclone may cause a drop of pressure.

In the International Patent Application, No. WO0049932, a cyclone dust collector placed at the extension pipe, in the same axis with respect to said pipe, is disclosed.

In the European Patent Application No. EP0827710, a cyclone dust collector placed at the extension pipe which may be in the same or in different axes with respect to said pipe, is disclosed.

EP 0 344 748 shows a cyclone separator according to the preamble of the independent claim.

The object of the present invention is to realise a cyclone separator placed on the suction path and which, by virtue of its geometry and structure, reduces the quantity of dirt collected in the dust-bag and extends the service life of the filter, by separating the small sized particles from the sucked-in air.

The object is solved by the cyclone separator defined in claim 1. Preferred embodiments are defined in the dependent claims.

The cyclone separator realized in order to attain the object of the present invention has been illustrated in the attached drawings, wherein;

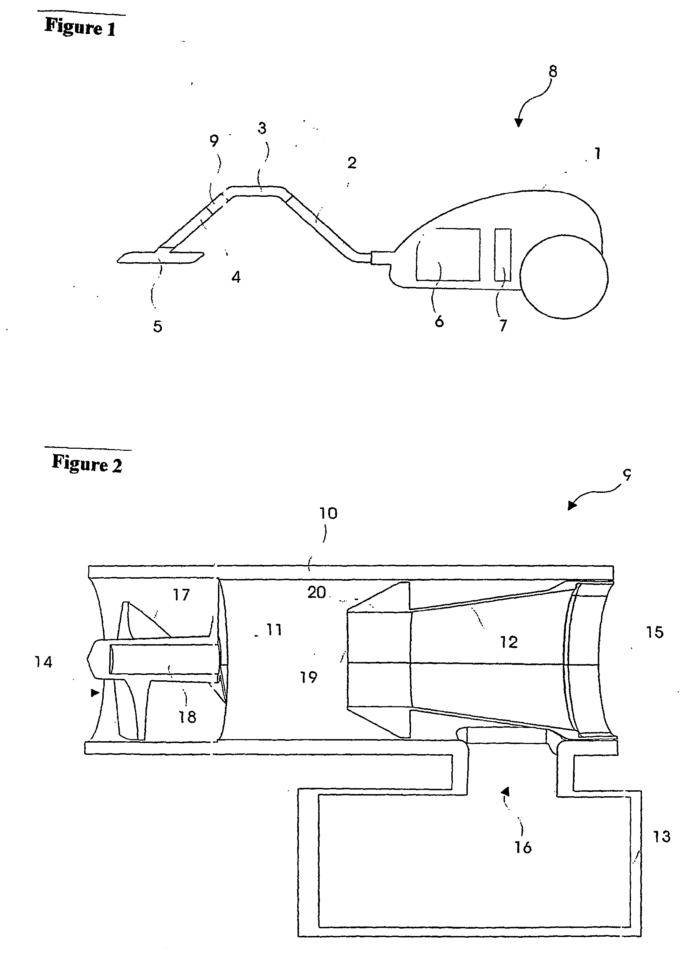

Figure 1, is the schematic view of a vacuum cleaner,
Figure 2, is the schematic view of the cyclone separator,

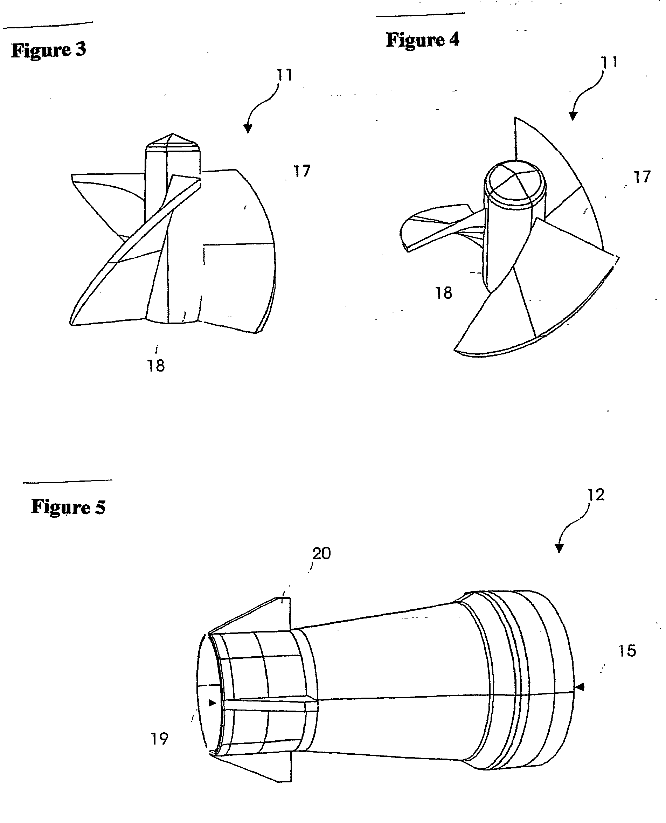

Figure 3, is the side view of the vortex generator,
Figure 4, is the perspective view of the vortex generator,
Figure 5, is the side view of the vortex suppressor.

The components shown in the drawings have been enumerated as listed below:
1. Vacuum cleaner body
2. Hose
3. Handle
4. Extension pipe
5. Floor cleaning unit
6. Dust bag
7. Filter
8. Vacuum cleaner
9. Cyclone dust separator
10. Cyclone body
11. Vortex generator
12. Vortex suppressor
13. Dust collecting-chamber
14. Air inlet
15. Air outlet
16. Hole
17. Blades
18. Hub
19. Mouth
20. Projection

The vacuum cleaner (8) according to the present invention comprises a main cleaner body (1); a flexible hose (2) preferably made of plastic material, connected to said body (1) and a handle (3) to facilitate the user's gripping; an extension pipe (4) made of metal or rigid plastic material, connected to said handle (3); a floor cleaning-unit (5) connected to one end of the extension pipe (4) for cleaning the rugs and/or hard floor surfaces; a cyclone dust separator (9) located on the suction path of the cleaner, to extract dirt and dust particles from the dirt/dust laden air sucked in through the floor cleaning unit (5); a dust bag (6) wherein the residual dust contained in the sucked-in air and which could not be separated by cyclone separator (9) is collected; and a filter (7) that captures the fmest particles in the air.

Said cyclone separator (9) is placed coaxially between any two components located on the suction path, for instance between two extension pipes (4) or between an extension pipe (4) and the handle (3).

Said cyclone separator (9) comprises a cyclone body (10); a vortex generator (11) placed in said cyclone body (10) and which creates vortices in the generally uniform flow of sucked-in air by means of its geometry; a vortex suppressor (12) located in the body (10) at a certain distance from the vortex generator (11) for stopping the the dust particles contained in the sucked-in air; and a dust collecting chamber (13).

The body (10) preferably has a cylindrical structure, comprising an inlet (14), an outlet (15) and a hole (16) opening to the dust collecting chamber (13). The vortex generator (11) is placed in the body (10) after the air inlet (14); and a vortex suppressor (12) is located after the vortex generator (11), which is followed by the air outlet (15). Said hole (16) is placed under the vortex suppressor (12).

Said vortex generator (11) comprises a hub (18) and one or more blades (17) arranged around the hub (18). Vortices are created when the laminar flow of suction air hits against said blades (17).

Said vortex suppressor (12) is located inside the body (10), after the vortex generator (11) and before the air outlet (15); it has a conical structure, the width of which increases from the vortex generator (11) to the air outlet (15). An opening (19), through which the suction air passes, is provided on the vortex suppressor (12) at a section close to the vortex generator (11). Projections (20), by means of which the dust particles carried-in by the flowing suction air are stopped as the result of the impact of the vortices, are provided on the vortex suppressor (12) at a section close to the opening (19).

When the vacuum cleaner (8) is operated, the air sucked-in through the floor cleaning unit (5), is directed towards the cyclone separator (9), and vortices are formed by the vortex generator (11) in the air entrained through the air inlet (14) flowing with a generally laminar flow. Said vortex generator (11), by virtue of its geometry, provides the flow of the suction air over the blades (17) without any separation and whereby the suction air gains a speed vector in the radial direction. Due to this structure, while relatively larger particles with low concentration flow close to the axis of said body (10), relatively smaller particles are pushed towards the body (10) inner wall and flow close to the inner walls. The larger dust particles at the center of the vortex, pass through the opening (19) and reach the air outlet (15) and then are separated by means of the dust bag (6) and the filter (7); whereas the smaller particles collected at the outer sections of the vortex, hit the projections (20) and escape from the effect of the centrifugal force. Said smaller particles, then pass through the hole (16) and are collected in the dust collecting chamber (13) which is in turn, separated from the body in order to remove the dust collected therein. Said dust collecting chamber (13) is re-usable.

In another embodiment of the present invention, the body (10) structure is made of two parts and the distance between the vortex generator (11) and the vortex suppressor (12) can be adjusted by a mechanism placed on the body (10), e.g. by a snap-fitting system providing several steps. In case said distance between the vortex generator (11) and the vortex suppressor (12) is decreased, the amount of dust collected in the dust collecting chamber (13) increases.

In another embodiment of the invention, the amount and dimensions of the dust collected in the dust collecting chamber (13) are determined by changing the Width of the vortex suppressor opening (19).

In another embodiment of the invention, the body (10) comprises two parts, the first part being cylindrical and containing the vortex generator (11) and the second part, being adjacent to the first one, having a conical structure.

By providing the cyclone separator (9) the small particles are prevented from entering the dust bag (6) and filter (7), thereby their service lives are increased, which in turn leads to a decrease in the cost of using vacuum cleaner (8).

## Claims

1. A cyclone separator (9) to be placed on the suction path of a vacuum cleaner (8), preferably between an extension pipe (4) and a handle (3) coaxially, which comprises a body (10) with an air inlet (14) and an air outlet (15); a vortex generator (11) placed inside said body (10), by means of which vortices are generated in the suction air by virtue of its geometry; a vortex suppressor (12) also located in the body (10) at a distance downstream of said vortex generator (11), and upstream of the air outlet (15), said vortex suppressor (12) having a conical structure the width of which increases from the vortex generator (11) to the air outlet (15), the vortex suppressor (12) being designed to stop at least partly, the dust particles flowing in together with the suction air; wherein an opening (19), through which the suction air passes, is provided on the vortex suppressor (12), the separator (9) further comprising a dust collecting chamber (13) wherein the dust particles stopped by the vortex suppressor (12) are collected; **characterized by** a plurality of projections (20) which are close to the opening (19), by means of which the dust particles carried-in by the flowing suction air hit and escape from the effect of the centrifugal force, are provided on the vortex suppressor (12).

2. A cyclone separator (9) as defined in Claim 1, **characterized by** each projection (20) being in the form of a thin rib extending in the axial direction of the vortex suppressor (12), each thin rib having an inclined wall part and a straight wall part.

3. A cyclone separator (9) as defined in Claim 1 or 2, **characterized by** the vortex generator (11) comprising a hub (18) and one or more blades (17) arranged around the hub (18), which provides the flow of the suction air over the blades (17) without any separation and whereby the suction air gains a speed vector in the radial direction and thus due to this structure, while relatively larger particles with low concentration flow close to the longitudinal axis of said body (10), relatively smaller particles are pushed towards the bodys (10) inner walls and flow close to the inner walls.

4. A cyclone separator (9) as defined in Claims 1, 2 and 3 **characterized by** a mechanism placed on the body (10) to adjust the distance between the vortex generator (11) and the vortex suppressor (12).

5. A cyclone, separator (9) as defined in Claims 1, 2 and 3 **characterized in that** the width of the opening (19) of the vortex suppressor (12) can be adjusted.

6. A cyclone separator (9) as defined in any one of the preceding claims, **characterized in that** the dust collecting chamber (13) can be separated from the body (10) in order to enable the dust collected therein to be removed.

## Patentansprüche

1. Zyklonabscheider (9) zum Anordnen im Ansaugweg eines Staubsaugers (8), vorzugsweise koaxial zwischen einem Verlängerungsrohr (4) und einem Griff (3), der Folgendes umfasst einen Körper (10) mit einem Lufteinlass (14) und einem Luftauslass (15); einen Wirbelerzeuger (11), der in dem Körper (10) angeordnet ist, und mit dem aufgrund seiner Geometrie in der Ansaugluft Wirbel erzeugt werden; einen Wirbelunterdrücker (12), der ebenfalls im Körper (10) stromabwärts beabstandet von dem genannten Wirbelerzeuger (11) und stromaufwärts von dem Luftauslass (15) angeordnet ist, wobei der genannte Wirbelunterdrücker (12) einen kegelförmigen Aufbau aufweist, dessen Breite vom Wirbelerzeuger (11) zum Luftauslass (15) hin zunimmt, wobei der Wirbelunterdrücker (12) dazu ausgelegt ist, die Staubteilchen, die zusammen mit der Ansaugluft einströmen, wenigstens teilweise aufzuhalten; wobei am Wirbelunterdrücker (12) eine Öffnung (19) vorgesehen ist, durch die die Ansaugluft strömt, wobei der Abscheider (9) ferner eine Staubsammelkammer (13) umfasst, in der die Staubteilchen, die vom Wirbelunterdrücker (12) aufgehalten wurden, gesammelt werden; **gekennzeichnet durch** mehrere Vorsprünge (20), die am Wirbelunterdrücker (12) in der Nähe der Öffnung (19) vorgesehen sind, und gegen die die Staubteilchen prallen, die von der strömenden Ansaugluft eingebracht werden, wodurch sie der Zentrifugalkraft entkommen.

2. Zyklonabscheider (9) nach Anspruch 1, **dadurch gekennzeichnet, dass** die einzelnen Vorsprünge (20) die Form einer dünnen Rippe aufweisen, die sich in Achsenrichtung des Wirbelunterdrückers (12) erstreckt, wobei die einzelnen dünnen Rippen jeweils einen geneigten Wandabschnitt und einen geraden Wandabschnitt aufweisen.

3. Zyklonabscheider (9) nach Anspruch 1 oder 2, **dadurch gekennzeichnet, dass** der Wirbelerzeuger (11) eine Nabe (18) und eine oder mehrere Schaufeln (17) umfasst, die um die Nabe (18) herum angeordnet sind, die das Strömen der Ansaugluft über die Schaufeln (17) ohne Abscheidung ermöglicht, wodurch die Ansaugluft in Radialrichtung einen Geschwindigkeitsvektor erhält, und durch diesen Aufbau verhältnismäßig kleine Teilchen zu den Innenwänden des Körpers (10) gedrückt werden und in der Nähe der Innenwände strömen, während verhältnismäßig große Teilchen mit geringer Konzentration in der Nähe der Längsachse des genannten Körpers (10) strömen.

4. Zyklonabscheider (9) nach den Ansprüchen 1, 2 und 3, **gekennzeichnet durch** einen Mechanismus, der am Körper (10) angeordnet ist, um den Abstand zwischen dem Wirbelerzeuger (11) und dem Wirbelunterdrücker (12) einzustellen.

5. Zyklonabscheider (9) nach den Ansprüchen 1, 2 und 3, **dadurch gekennzeichnet, dass** die Breite der Öffnung (19) des Wirbelunterdrückers (12) einstellbar ist.

6. Zyklonabscheider (9) nach einem der vorhergehenden Ansprüche, **dadurch gekennzeichnet, dass** die Staubsammelkammer (13) vom Körper (10) gelöst werden kann, um den darin gesammelten Staub zu entfernen.

## Revendications

1. Un séparateur cyclone (9) disposé sur le chemin d'aspiration d'un aspirateur (8), préférablement entre un tuyau d'extension (4) et une poignée (3) coaxiallement, qui comprend un corps (10) avec une entrée d'air (14) et une sortie d'air (15), un générateur de vortex (11) disposé à l'intérieur dudit corps (10), au moyen duquel les vortex sont générés dans l'air d'aspiration en raison de sa géométrie ; un suppresseur de vortex (12) aussi disposé à l'intérieur du corps (10) à une distance en aval dudit générateur de vortex (11) et en amont de la sortie d'air (15), ledit suppresseur de vortex (12) ayant une structure conique dont la largeur augmente à partir du générateur de vortex (11) à la sortie d'air (15), le suppresseur de vortex (12) étant destiné à s'arrêter au moins partiellement des particules de poussière qui coulent avec l'air d'aspiration ; où une ouverture (19), par laquelle l'air d'aspiration passe, est disposé sur le suppresseur de vortex (12), le séparateur (9) comprenant de plus une chambre de collecte de poussière (13) dans laquelle les particules de poussière arrêtées par le suppresseur de vortex (12) sont collectées ; **caractérisé par** une pluralité de projections (20) qui est proche de l'ouverture (19), au moyen de laquelle les particules de poussière portées dedans par l'air d'aspiration écoulant frappent et s'échappent de l'effet de la force centrifuge, est disposé sur le suppresseur de vortex (12).

2. Un séparateur cyclone (9) selon la Revendication 1, **caractérisé par** chaque projection (20) étant sous la forme d'une nervure mince s'étendant dans le sens axial du suppresseur de vortex (12), chaque nervure mince ayant une partie de paroi inclinée et une partie de paroi droite.

3. Un séparateur cyclone (9) selon les revendications 1 ou 2, **caractérisé par** le générateur de vortex (11) comprenant un moyeu (18) et une ou plusieurs pales (17) arrangées autour du moyeu (18), qui permet l'écoulement de l'air d'aspiration sur les pales (17) sans aucune séparation et dans lequel l'air d'aspiration gagne de la vitesse dans le sens radial et ainsi à cause de cette structure, tandis que les particules relativement plus grandes avec une concentration faible écoulent près de l'axe longitudinal dudit corps (10), les particules relativement petites sont poussées vers les parois intérieures du corps (10) et écoulent près des parois intérieures.

4. Un séparateur cyclone (9) selon les revendications 1, 2 et 3, **caractérisé par** un mécanisme situé sur le corps (10) pour l'ajustement de la distance entre le générateur de vortex (11) et le suppresseur de vortex (12).

5. Un séparateur cyclone (9) selon les revendications 1, 2 et 3, **caractérisé en ce que** la largeur de l'ouverture du suppresseur de vortex (12) peut être ajustée.

6. Un séparateur cyclone (9) selon l'une quelconque des revendications précédentes, **caractérisé en ce que** la chambre de collecte de poussière (13) peut être séparée du corps (10) afin de permettre à la poussière collectée là d'être supprimées.
